# EUROPEAN PATENT SPECIFICATION

(11) **EP 2 502 283 B1**
(45) Date of publication and mention of the grant of the patent: **06.09.2017**
(21) Application number: 10830385.0
(22) Date of filing: 07.10.2010
(51) Int. Cl.: H02S 20/23, F24J 2/52, F24J 2/00

(54) **REPLACEABLE PHOTOVOLTAIC ROOF PANEL**
AUSTAUSCHBARE FOTOVOLTAIK-DACHTAFEL
PANNEAU DE TOIT PHOTOVOLTAÏQUE POUVANT ÊTRE REMPLACÉ

(30) Priority: 16.11.2009 US 261730 P; 30.09.2010 US 895652
(43) Date of publication of application: 26.09.2012
(73) Proprietor: SunPower Corporation, San Jose, CA 95134 (US)
(72) Inventor: LENOX, Carl J.S., Oakland California 94609 (US)
(74) Representative: Grünecker Patent- und Rechtsanwälte PartG mbB
(86) International application number: PCT/US2010/051769
(87) International publication number: WO 2011/059605

(56) References cited:
- WO-A1-2008/108909
- WO-A1-2008/153936
- JP-A- 2006 266 067
- US-A1- 2004 140 002
- US-A1- 2005 217 716
- US-A1- 2006 086 382
- US-A1- 2007 157 963
- US-A1- 2007 295 391
- US-A1- 2009 242 014

## Description

### TECHNICAL FIELD

Embodiments of the subject matter described herein relate generally to building-integrated integrated photovoltaic (BIPV) systems. More particularly, embodiments of the subject matter relate to module coupling arrangements for use in BIPV systems.

### BACKGROUND

In a building-integrated photovoltaic (BIPV) system, traditional roofing components are replaced with structural elements containing photovoltaic (PV) solar cells. These energy-generating components can replace, for example, shingles and tiles on a building's rooftop, eliminating the need for PV system mounting devices on a traditional roof.

While overcoming some challenges related to rooftop mounting, other challenges can exist in BIPV systems. For example, a BIPV system can consist of numerous PV elements which are overlaid with each other, much like shingles in a traditional roof. Thus, replacing one element in need of maintenance can be disruptive to surrounding elements.

A typical installation can have roofing elements with a replaceable laminate containing PV cells. A laminate, typically including numerous cells, is often surrounded by a structural frame to form a PV module. In some cases, a portion, or all, of the frame surrounding the laminate must be disassembled or detached, to permit access to the portion of the module needing maintenance. This approach typically involves storing additional laminates, which are fragile and relatively expensive, as well as requiring significant labor and technical cost in performing the maintenance. The frame is frequently damaged or destroyed as part of the process of replacing the laminate, even further increasing cost. Alternately or in addition, other roofing elements must be removed into order to access the module requiring maintainance. Doing so can compromise the waterproofing integrity of the roof and incur additional cost.

Additionally, the National Electric Code (NEC) requires that access to electrical connections between modules be made available without compromising the integrity of the roof. Disassembly of adjacent roofing elements solely to provide access to electrical connections is considered to compromise the integrity of the roof.

Document WO 2008/108909 A1 discloses a Multi-function frame and integrated mounting system for photovoltaic power generating laminates, which permits the photovoltaic power-generating cells, DC/AC power conversion means, electrical wiring and other installation aspects to be merged into the module.

Document US 2007/0157963 A1 discloses a modular system that includes a composite tile, with or without integrated photovoltaic cells, a track system for assembly of the tiles to a structure, and a wiring system for the photovoltaic tile.

Document JP 2006-266067 A according to the preamble of claim 1 discloses an external facing structure of a building in which the external facing surfaces thereof are formed of solar cells.

### BRIEF SUMMARY

The invention provides a replaceable building-integrated photovoltaic (BIPV) module system with the features of claim 1.

Advantageous developments of the invention can be found in the dependent claims.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is an exploded view of an embodiment of photovoltaic (PV) module;
FIG. 2 is a perspective view of the assembled embodiment of the PV module of Claim 1;
FIG. 3 is a perspective view of an embodiment of a building-integrated photovoltaic system (BIPV);
FIG. 4 is a detailed view of a portion of the BIPV system of FIG. 3;
FIG. 5 is a side view of a portion of an embodiment of a BIPV system;
FIG. 6 is a perspective view of a portion of an embodiment of a BIPV system showing mounting portions;
FIG. 7 is a side view of an embodiment of an assembled BIPV system; and
FIG. 8 is an underside view of an embodiment of a BIPV system.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

"Coupled" - The following description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the schematic shown in the figures depict at least one exemplary arrangement of elements, additional intervening elements, devices, features, or components can be present in an embodiment of the depicted subject matter.

"Adjust" - Some elements, components, and/or features are described as being adjustable or adjusted. As used herein, unless expressly stated otherwise, "adjust" means to position, modify, alter, or dispose an element or component or portion thereof as suitable to the circumstance and embodiment. In certain cases, the element or component, or portion thereof, can remain in an unchanged position, state, and/or condition as a result of adjustment, if appropriate or desirable for the embodiment under the circumstances. In some cases, the element or component can be altered, changed, or modified to a new position, state, and/or condition as a result of adjustment, if appropriate or desired.

"Inhibit" - As used herein, inhibit is used to describe a reducing or minimizing effect. When a component or feature is described as inhibiting an action, motion, or condition it may completely prevent the result or outcome or future state completely. Additionally, "inhibit" can also refer to a reduction or lessening of the outcome, performance, and/or effect which might otherwise occur. Accordingly, when a component, element, or feature is referred to as inhibiting a result or state, it need not completely prevent or eliminate the result or state.

In addition, certain terminology may also be used in the following description for the purpose of reference only, and thus are not intended to be limiting. For example, terms such as "upper", "lower", "above", and "below" refer to directions in the drawings to which reference is made. Terms such as "front", "back", "rear", and "side" describe the orientation and/or location of portions of the component within a consistent but arbitrary frame of reference which is made clear by reference to the text and the associated drawings describing the component under discussion. Such terminology may include the words specifically mentioned above, derivatives thereof, and words of similar import. Similarly, the terms "first", "second", and other such numerical terms referring to structures do not imply a sequence or order unless clearly indicated by the context.

A solution for maintenance and replacement of building-integrated photovoltaic (BIPV) systems is constructing a framed photovoltaic (PV) module which is releaseably coupled to one or more engagement sites on the top surface of a building. The PV module can form the roof or roofing structure, as with other BIPV systems. When necessary for replacement the PV module can be released from the engagement site(s) and replaced with another PV module. Advantageously, it is not necessary to disturb the structural integrity of the module frame, such as is needed when replacing a laminate within a frame. This latter case typically occurs when the frame is directly mounted to the building and it is not detachable.

As used herein, a roofing structure or roofing surface, whether the uppermost surface or otherwise, can refer to the primary watershedding layer of a roof. The primary watershedding layer can be the surface on which precipitation is deflected when falling on the roof of the building. A roofing structure need not be structural, although it can be in certain embodiments. In certain circumstances, a roofing surface can be one of a series of layers which are positioned on top of a building to increase isolation between the interior of the building and surrounding environmental conditions, including precipitation and wind. Thus, certain roofing structures overlay the rooftop of a building and are not part of the building envelope, but instead appear aesthetically integrated with the roof.

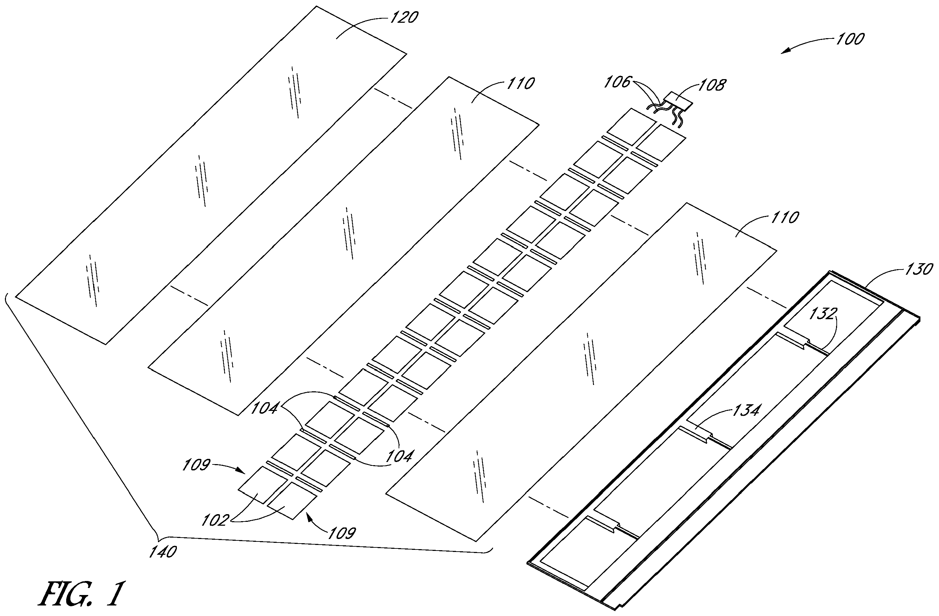

FIG. 1 illustrates an exploded view of a PV module 100 for use in a BIPV system. The PV module 100 comprises a PV laminate 140 surrounded and supported by a frame 130. The frame 130 can extend around the perimeter of the PV laminate 140. The PV laminate 140 is comprised of PV cells 102 coupled by interconnects 104 with bus bars 106 coupled to a central bus 108. The PV cells 102 are constructed into a PV string 109 by coupling them together and electrically connecting them with the interconnects 104. Two PV strings 109 are shown for simplicity, while any desired number of PV cells 102 can be formed into a single string. Similarly, any desired number of PV strings 109 can be present in a PV laminate 140, including one.

The PV cells 102 have an upper, sunny side which can be presented toward the sun to generate electrical current. The other side can be referred to as the reverse side. In certain embodiments, the PV cells 102 include back-contact silicon wafers. In some embodiments, the PV cells 102 include back-contact, back-junction solar cells. The bus bars 106 can couple to the central bus 108 within the PV laminate 140, or they can penetrate the PV laminate 140 and electrically couple to a junction box outside the PV laminate 140.

The PV strings 109 can be enclosed within layers of encapsulant 110. One encapsulant is poly-ethyl-vinyl acetate (EVA). Tedlar/Polyester/EVA (TPE) can also be used. The encapsulant 110 layers are preferably aligned to each other. A transparent cover 120 can then be placed over the upper, sunny side of the PV strings 109. The transparent cover 120 can be a glass or plastic sheet which desirably permits light to transmit through to reach the PV cells 102. In certain embodiments, a backsheet can be placed beneath the EVA encapsulant 110 under the PV strings 109. In some embodiments, the backsheet can be integrally-formed with the EVA encapsulant 110. The backsheet can be white, black, or any other color desired for the embodiment. The backsheet can help reflect or absorb sunlight, including reflecting sunlight which does not directly impinge a solar cell, back towards the solar cells, increasing the efficiency of the PV module 100.

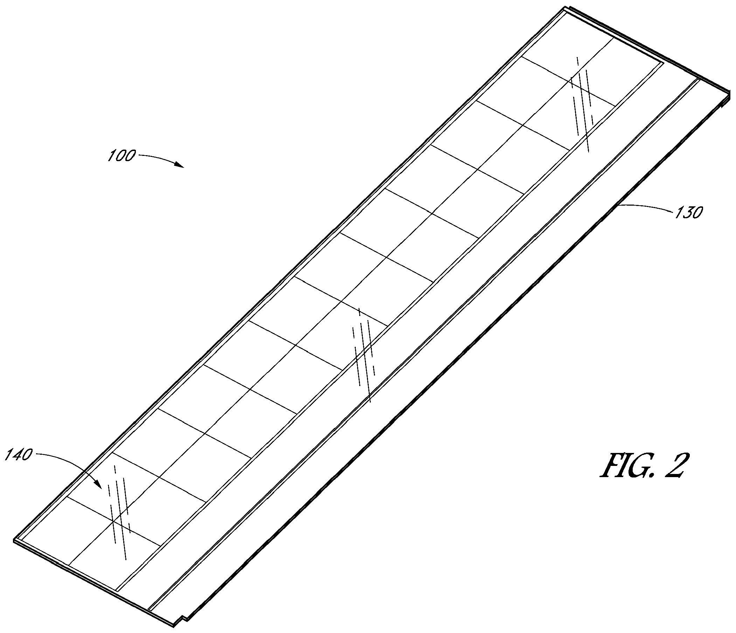

The entire PV laminate 140 can then be exposed to a heat source to cause it to adhere, thus forming a "laminated" component. The PV laminate 140 can provide structural support and maintain its components in desired positions. The PV laminate 140 can then be positioned within the frame 130. The frame 130 has grooves 132 on its underside, as well as retaining clips 134 positioned along or near the grooves 132. FIG. 2 illustrates an assembled PV module 100. The frame 130 substantially entirely surrounds and supports the PV laminate 140.

As used herein, PV laminate refers not only to the above embodiment, but to other constructions and embodiments surrounding and supporting solar cells as well. For example, while back-contact, back-junction solar cells are used in one embodiment, in other embodiments, a photovoltaic laminate can contain front-contact solar cells, as well as both crystalline and non-crystalline solar cells. For example, in certain embodiments, thin-film photovoltaic elements can be present within the frame 130 for the purpose of converting sunlight to energy. Accordingly, solar cells of the size, shape, and composition described herein are not limiting embodiments. Therefore, any such construction also can be considered a photovoltaic laminate.

In certain embodiments, some components of the photovoltaic laminate can be omitted, such as the encapsulant 110 or transparent cover 120. In some embodiments, other components can be present, either as substitute components or additional elements. For example, a backsheet can be present as well as a non-EVA laminating material which is used to provide structure and/or support to the PV strings present. Alternatively, in certain embodiments, only a single laminating layer may be present.

In certain embodiments, the photovoltaic laminate, as used herein, can include rigid elements which enclose the photovoltaic cells. For example, curved or hemispherical glass or plastic elements can be present above the sunny side of a solar cell. As used herein, photovoltaic laminate refers to an environmentally-protected package which contains photovoltaic elements, such as solar cells. The environmental protection can derive from a transparent cover, such as in the illustrated embodiment, as well as laminating elements or sealing elements of other kinds. Thus, although one embodiment is disclosed and illustrated for descriptive purposes, a practitioner of ordinary skill in the art will understand that different embodiments can include a variety of construction techniques, composition and/or arrangement or elements, and types of photovoltaic elements into a package referred to herein as photovoltaic laminate.

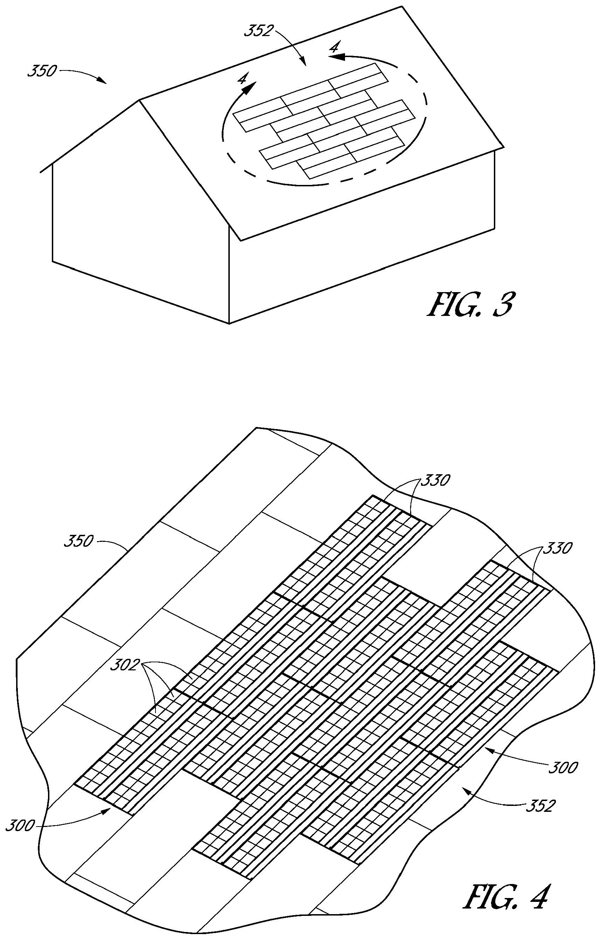

FIGS. 3 and 4 illustrate a building 350 having a BIPV system 352 embedded in and forming a surface of the roof. FIG. 4 illustrates a detailed view of the BIPV system 350. Unless otherwise noted, the numerical indicators shown refer to similar components as those of FIGS. 1 and 2, except that they have been incremented by 200. As can be seen, PV modules 300 can be integrated with the roof of the building 350. The PV modules 300 can be sized and shaped as desired to substitute for traditional roofing materials, such as shingles or tiles. The PV modules 300 similarly can be staggered and overlapping.

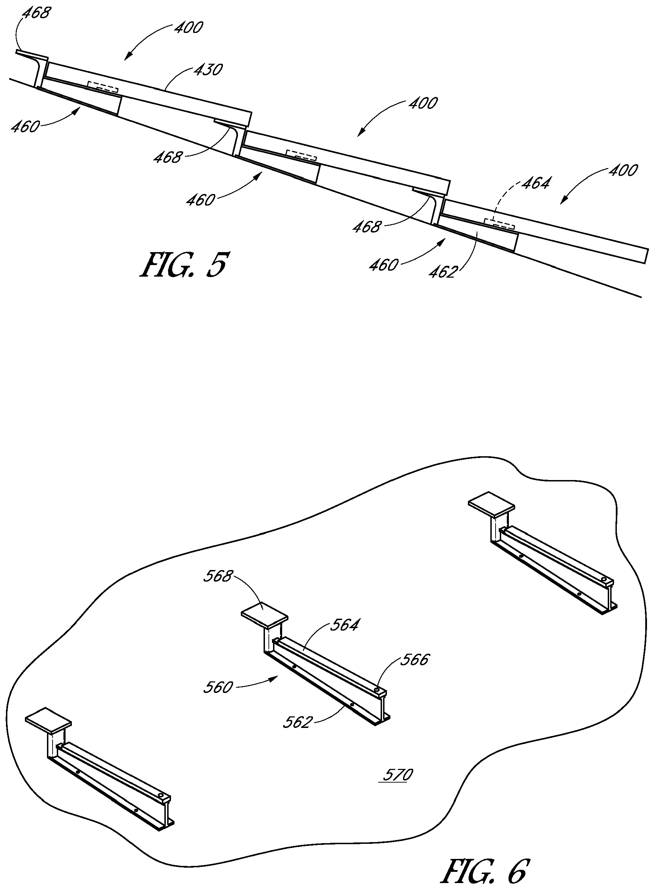

FIG. 5 illustrates a side view of overlapping PV modules 400 mounted on engagement sites 460 in accordance with one embodiment. Unless otherwise explained, numerical indicators used in FIG. 5 refer to similar components to those of FIGS. 1 and 2 except that the numerical reference has been incremented by 300.

The engagement sites 460 can be coupled to the upper surface of the building on which the PV modules 400 are mounted, such as, rafters or sheeting. Each engagement site 460 is composed of an anchoring portion 462, a post 464 and a stop 468. The entire engagement site 460 can be referred to as a skid which supports the PV module 400. The post 464, or mounting post, is sized and shaped appropriately to engage the frame 430 at one of the grooves 432. Each stop 468 is formed to support the lower surface of the adjacent PV module 400, as shown. The PV modules 400 are releaseably coupled to the posts 464 by retaining clips 434. Accordingly, each separate PV module 400 can be released from the posts 464 and removed from the BIPV system 450 for replacement or maintenance. Thus, the entire system need not be affected, or the structural integrity of a frame surrounding several laminates disturbed.

FIG. 6 illustrates a portion of a roofing surface 570, such as the sheeting or rafter on the upper surface of a building which supports roofing materials. Unless otherwise explained, numerical indicators used in FIG. 6 refer to similar components to those of FIG. 5 except that the numerical reference has been incremented by 100.

As can be seen, the anchoring portion 562 can be coupled to the roofing surface 570, such as by a fastener, including screws, bolts, nails, and the like. The post 564 can extend upwardly from the anchoring portion 562 for attachment to the PV module 500 via the frame 530. The post 564 can have any desired cross-sectional shape, including round, circular, triangular, and so on. The post 564 can have a contiguous formation with the anchoring portion 562, or it can separate and extend from the anchoring portion 562.

The post 562 has a notch 566. The notch 566 can be located at or near the tip of the post 562 and extend partway through the post 562. The notch 566 preferably extends vertically downward into the post 562 from the uppermost edge, although in certain embodiments, it can extend in a diagonal direction across the cross-section of the post 562.

Although three engagement sites 560 are shown, more or fewer can be used to couple to a single PV module 500. Preferably, at least two engagement sites 560 are used to couple each PV module 500 to the building. In certain embodiments, however, only one is used. The engagement sites 560 can be arranged parallel to each other. The engagement sites 560 comprise means for providing a location to which the retaining clips 534 can releaseably couple. In certain embodiments, the engagement sites 560 can comprise ports or holes, including threaded holes, which can receive and couple with the retaining clips 534.

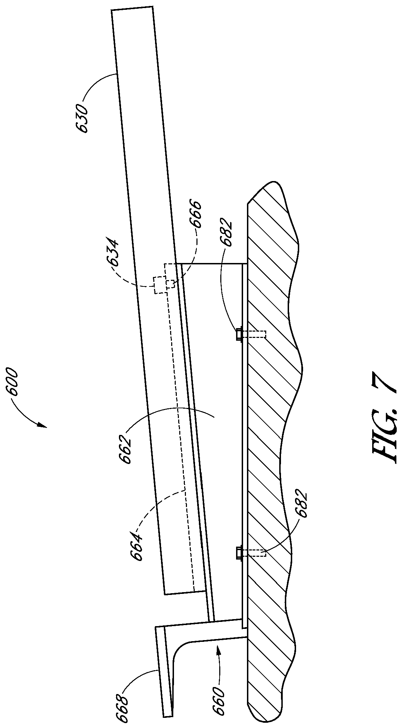

FIG. 7 illustrates a side view of an engagement of a PV module 600 to a plurality of engagement sites 560. Unless otherwise explained, numerical indicators used in FIG. 7 refer to similar components to those of FIG. 6 except that the numerical reference has been incremented by 100.

The PV module 600 is shown coupled to an engagement site 660. Several engagement sites 660 can be engaged along the side of the PV module 600, although only one is shown. The anchoring portion 662 is coupled to the roofing surface by fasteners 682. The stop 668 extends upward from the anchoring portion 662 along the frame 630. The stop 668 supports adjacent, overlapping PV modules 600.

The post 664 can extend into the groove 632 to align and couple the engagement site 660 to the PV module 600. The notch 666 can be positioned along the post 664 to engage the retaining clip 634. The retaining clip 634 can be biased to remain engaged with the post 664, including the notch 666, such as by a spring or other biasing element, including an elastic member. The retaining clip 634 can be considered in a closed, locked, coupled, or engaged position when clasped or coupled to the post 664. The retaining clip 634 can be moved to an open, unlocked, uncoupled, or disengaged position by exerting a force against the biasing element, such as the spring, such as by hand manipulation or via manipulation by a tool, including a specialized tool with custom mating interface. The PV module 600 can then be decoupled from the engagement site 660.

In certain embodiments, the height of the anchoring portion 662 and/or post 664 can be selected to position the frame 630 at a desired height off the roofing surface beneath. In some embodiments, the anchoring portion 662 can be tapered, or the post 664 can be tapered and/or extend at an angle to the anchoring portion 662 or roofing surface to cause the PV module 600 to rest at an angle when constructed. Such positioning and/or registration functions of the coupling between the PV module 600 and engagement site 660 can be used to position, align, overlap, orient, or otherwise assist in the placement of PV modules 600 when integrating into a roof for a building.

In some embodiments which are not part of the claimed invention, the retaining clip 634 can be removed for an alternative coupling embodiment, such as a fastening device, including a screw, nut-and-bolt arrangement, threaded rod, and so on, which coupled to the post 664. Any other type of retaining device, mechanism, or technique can be used, including releaseable materials, such as a bonding agent or Velcro connection, and so on. In certain embodiments, the retaining clip 634 can be attached to or integrally formed with the post 664 and couple with an engagement site of the PV module 600, such as one formed in the groove 632 or otherwise attached with or to the frame 630. For example, the groove 632 can have a notch or indentation similar to the notch 666 which can engage a clip or coupling device of any type described herein with respect to the retaining clip 634 formed on or attached to the post 664.

In some embodiments of the retaining clip 634, a spring-biased clip can extend across the post 664, which engages into the notch 666 when in the engaged position. The retaining clip 634 can then be retracted to allow the PV module 600 to be released from the engagement site(s) 660. In this way, the PV module 600 can be removed from the BIPV system and be replaced, if necessary, thereby avoiding destruction of a framed system where multiple laminates are incorporated into a single frame.

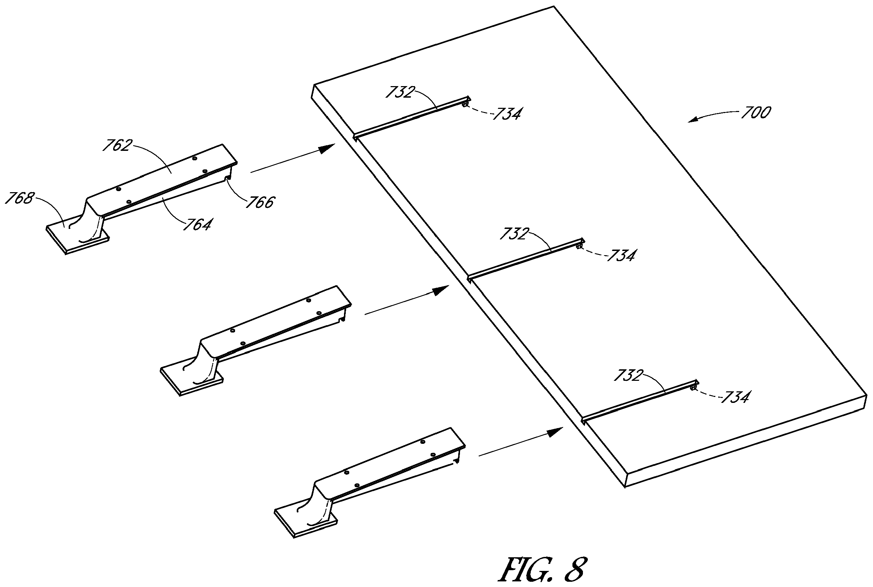

FIG. 8 illustrates an underside view an exploded engagement between a PV module 700 and three engagement sites 760. Unless otherwise explained, numerical indicators used in FIG. 8 refer to similar components to those of FIG. 7 except that the numerical reference has been incremented by 100.

Each engagement site 760 is shown to align with a groove 732 of the frame 730. Each post 764 can extend into the groove 732 to releaseably engage the notch 766 with the retaining clip 734. The PV module 700 can then be secured to form the roof of the building supporting the BIPV system.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments.

## Claims

1. A replaceable building-integrated photovoltaic module system, comprising:
a module frame (430, 630) having a plurality of retaining clips (434, 634, 734), the module frame (430, 630) substantially surrounding a photovoltaic laminate (140),
the module system further comprises a plurality of skids (460, 560, 660, 760),
wherein each of the plurality of skids (460, 560, 660, 760) is composed of an anchoring portion (462, 562, 662), a mounting post (464, 564, 664, 764) and a stop (468, 668),
wherein the anchoring portion (462, 562, 662) is configured to be coupled to a roofing surface (570), and
wherein each skid (460, 560, 660, 760) comprises a notch (566, 666, 766) on the mounting post (464, 564, 664, 764), each retaining clip (434, 634, 734) adapted to releasably couple to the mounting post (464, 564, 664, 764) by engaging the notch (566, 666, 766),
**characterized in that**
the module frame (430, 630) has groves (132, 432) on its underside, wherein the retaining clips are positioned along or near the grooves (132, 432),
wherein the mounting post is sized and shaped to engage the frame (430, 630) at one of the grooves (132, 432), and
wherein the stop (468, 668) extends upward from the anchoring portion (462, 562, 662) along the frame (430, 630) for supporting an adjacent PV module (400, 600).

2. The replaceable building-integrated photovoltaic module system according to Claim 1, wherein each retaining clip (434, 634, 734) comprises a spring adapted to bias the retaining clip (434, 634, 734) in an engaged position, the retaining clip (434, 634, 734) coupled to the skid (460, 560, 660, 760) when in the engaged position.

3. The replaceable building-integrated photovoltaic module system according to Claim 1 or 2, wherein each retaining clip (434, 634, 734) is adapted to release from the skid (460, 560, 660, 760) when manipulated to an open position by disengaging the retaining clip (434, 634, 734) from one of the notches (566, 666, 766) in one of the skids (460, 560, 660, 760).

4. The replaceable building-integrated photovoltaic module system according to at least one of the Claims 1 - 3, wherein the module frame (430, 630) comprises a photovoltaic laminate(140) forming an upper surface of the module system.

5. The replaceable building-integrated photovoltaic module system according to at least one of the Claims 1 - 4, wherein each of the plurality of skids (460, 560, 660, 760) is mounted to a building (350), and the upper surface of the module system comprises the roof surface (570) of the building (350).

## Patentansprüche

1. Austauschbares gebäudeintegriertes Photovoltaikmodulsystem, umfassend:
einen Modulrahmen (430, 630) mit einer Vielzahl von Halteklammern (434, 634, 734), wobei der Modulrahmen (430, 630) ein photovoltaisches Laminat (140) im Wesentlichen umgibt,
wobei das Modulsystem ferner eine Mehrzahl von Kufen (460, 560, 660, 760) umfasst,
wobei sich jede der Mehrzahl von Kufen (460, 560, 660, 760) aus einem Verankerungsabschnitt (462, 562, 662), einem Montagepflock (464, 564, 664, 764) und einem Anschlag (468, 668) zusammensetzt,
wobei der Verankerungsabschnitt (462, 562, 662) ausgelegt ist, an eine Bedachungsoberfläche (570) gekoppelt zu werden, und
wobei jede Kufe (460, 560, 660, 760) eine Einkerbung (566, 666, 766) am Montagepflock (464, 564, 664, 764) umfasst, wobei jede Halteklammer (434, 634, 734) geeignet ist, durch In-Eingriff-Bringen in die Einkerbung (566, 666, 766) lösbar mit dem Montagepflock (464, 564, 664, 764) gekoppelt zu werden,
**dadurch gekennzeichnet, dass**
der Modulrahmen (430, 630) auf seiner Unterseite Nuten (132, 432) aufweist, wobei die Halteklammern entlang der oder nahe den Nuten (132, 432) positioniert sind,
wobei der Montagepflock so bemessen und geformt ist, dass er den Rahmen (430, 630) an einer der Nuten (132, 432) in Eingriff bringt, und
wobei sich der Anschlag (468, 668) aus dem Verankerungsabschnitt (462, 562, 662) entlang des Rahmens (430, 630) zum Stützen eines angrenzenden PV-Moduls (400, 600) nach oben erstreckt.

2. Austauschbares gebäudeintegriertes Photovoltaikmodulsystem nach Anspruch 1, wobei jede Halteklammer (434, 634, 734) eine Feder umfasst, die geeignet ist, die Halteklammer (434, 634, 734) in eine Eingriffsstellung vorzuspannen, wobei die Halteklammer (434, 634, 734) in der Eingriffsstellung an die Kufe (460, 560, 660, 760) gekoppelt ist.

3. Austauschbares gebäudeintegriertes Photovoltaikmodulsystem nach Anspruch 1 oder 2, wobei jede Halteklammer (434, 634, 734) geeignet ist, sich von der Kufe (460, 560, 660, 760) zu lösen, wenn sie durch Freisetzen der Halteklammer (434, 634, 734) aus einer der Einkerbungen (566, 666, 766) in einer der Kufen (460, 560, 660, 760) in eine geöffnete Position gebracht wird.

4. Austauschbares gebäudeintegriertes Photovoltaikmodulsystem nach wenigstens einem der Ansprüche 1 bis 3, wobei der Modulrahmen (430, 630) ein photovoltaisches Laminat (140) umfasst, das eine Oberseite des Modulsystems bildet.

5. Austauschbares gebäudeintegriertes Photovoltaikmodulsystem nach wenigstens einem der Ansprüche 1 bis 4, wobei jede der Mehrzahl von Kufen (460, 560, 660, 760) an einem Gebäude (350) montiert ist, und die Oberseite des Modulsystems die Dachoberfläche (570) des Gebäudes (350) umfasst.

## Revendications

1. Système de module photovoltaïque remplaçable intégré à un bâtiment, comprenant :
un cadre de module (430, 630) possédant une pluralité d'attaches de retenue (434, 634, 734), le cadre de module (430, 630) entourant essentiellement un stratifié photovoltaïque (140),
le système de module comprend en outre une pluralité de patins (460, 560, 660, 760),
dans lequel chacun parmi la pluralité de patins (460, 560, 660, 760) est composé d'une partie d'ancrage (462, 562, 662), d'un support de montage (464, 564, 664, 764) et d'un arrêt (468, 668),
dans lequel la partie d'ancrage (462, 562, 662) est conçue pour être couplée à une surface de toiture (570), et
dans lequel chaque patin (460, 560, 660, 760) comprend une encoche (566, 666, 766) sur le support de montage (464, 564, 664, 764), chaque attache de retenue (434, 634, 734) étant conçue pour se coupler de manière libérable au support de montage (464, 564, 664, 764) par mise en prise avec l'encoche (566, 666, 766),
**caractérisé en ce que**
le cadre de module (430, 630) a des rainures (132, 432) sur sa face inférieure, dans lequel les attaches de retenue sont positionnées le long ou à proximité des rainures (132, 432),
dans lequel le support de montage est dimensionné et profilé pour venir en prise avec le cadre (430, 630) au niveau d'une des rainures (132, 432), et
dans lequel l'arrêt (468, 668) s'étend vers le haut à partir de la partie d'ancrage (462, 562, 662) le long du cadre (430, 630) pour soutenir un module photovoltaïque adjacent (400, 600).

2. Système de module photovoltaïque remplaçable intégré à un bâtiment
selon la revendication 1, dans lequel chaque attache de retenue (434, 634, 734) comprend un ressort conçu pour solliciter l'attache de retenue (434, 634, 734) dans une position en prise, l'attache de retenue (434, 634, 734) étant couplée au patin (460, 560, 660, 760) lorsqu'elle se trouve dans la position en prise.

3. Système de module photovoltaïque remplaçable intégré à un bâtiment
selon la revendication 1 ou 2, dans lequel chaque attache de retenue (434, 634, 734) est conçue pour se libérer du patin (460, 560, 660, 760) lorsqu'elle est manipulée en une position ouverte par désaccouplement de l'attache de retenue (434, 634, 734) d'une des encoches (566, 666, 766) dans un des patins (460, 560, 660, 760).

4. Système de module photovoltaïque remplaçable intégré à un bâtiment
selon au moins une des revendications 1 à 3, dans lequel le cadre de module (430, 630) comprend un stratifié photovoltaïque (140) formant une surface supérieure du système de module.

5. Système de module photovoltaïque remplaçable intégré à un bâtiment
selon au moins une des revendications 1 à 4, dans lequel chacun parmi la pluralité de patins (460, 560, 660, 760) est monté sur un bâtiment (350), et la surface supérieure du système de module comprend la surface de toit (570) du bâtiment (350).
